# EUROPÄISCHE PATENTANMELDUNG

(11) **EP 0 521 845 A1**
(43) Veröffentlichungstag der Anmeldung: **07.01.1993**
(21) Anmeldenummer: 92890162.8
(22) Anmeldetag: 02.07.1992
(51) Int. Cl.: A01B 25/00, A01B 49/06, A01C 7/20

(54) **Fahrbare Sämaschine**

(30) Priorität: 02.07.1991 AT 1326/91
(71) Anmelder: JANUSCHKOWETZ GmbH, A-3372 Blindenmarkt (AT)
(72) Erfinder: Januschkowetz, Josef, A-3372 Blindenmarkt (AT)
(74) Vertreter: Müllner, Erwin, Dr.

(57) **Zusammenfassung**

Eine Sämaschine umfaßt mindestens eine drehbar gelagerte und in Bodenberührung geführte schalenförmige Scheibe (1), die zur Fahrtrichtung (18) und zur Vertikalen jeweils um einen Winkel von etwa 10° - 25° schräggestellt ist. Ein Särohr (3) ist jeder Scheibe (1) zugeordnet, das im konvexen Scheibenbereich ausmündet. Das Särohr (3) liegt exzentrisch zur Scheibe (1) und ist als Träger für das Scheibenlager ausgebildet, das auf einem in Fahrtrichtung (18) vom Särohr (3) auskragenden Ausleger (2) sitzt. Das Särohr (3) ist entgegen der Fahrtrichtung (18) und gegen die Kraft von Federn (15,16) auf einem Rahmen (10) zurückklappbar gelagert. Eine Mehrzahl von Scheibenanordnungen (22) ist in Reihen auf Querbalken (9) eines Rahmens (10) versetzt zueinander vorgesehen.

## Beschreibung

Die Erfindung betrifft eine fahrbare Sämaschine mit mindestens einer in Bodenberührung geführten und drehbar gelagerten, laufradähnlichen Scheibe, der ein mit einem Vorratsbehälter in Verbindung stehendes Särohr zugeordnet ist.

Ackerflächen sollten aus Gründen der Revitalisierung und Stabilisierung gegen Wind und Wasser (Erosion) mit Ernterückständen oder Zwischenfruchtbeständen belegt bleiben. Gleichzeitig ist aber eine wichtige Voraussetzung, daß die Bodenfeuchtigkeit, sowie Luft- und Gasaustausch berücksichtigt und optimiert werden. Diesen Anforderungen entspricht eine Kombination von Bodenfräsen mit verschiedenen Rotoren und eingesetzten Lockerungswerkzeugen, die den Unterboden lockern bzw. durchlüften. Die Arbeitstiefe ist den jeweiligen Erfordernissen anzupassen. Ein hinter dem Rotor angebrachtes Schild, das sehr knapp hinter dem Rotor in vertikaler Position hydraulisch höhenverstellbar ist, dient zur Regulierung von Durchsatz, Einebnung und MIX von Biomasse mit dem Oberboden. Die sehr gut durchmischte und mit Biomasse stark durchsetzte Oberfläche bleibt stabil gegen Wind und Wasser (Erosion), wie auch gegen Verschlämmung nach starken Regenfällen. Luft- und Gasaustausch sind optimiert. Dem Bio-Haushalt im Bereich der Mikro- und Makroorganismen, sowie dem aeroben Verrottungsprozeß sind die besten Voraussetzungen geboten.
In diese, für den biologischen Bereich optimale Beschaffenheit des Bodens ist es problematisch, Folgesaaten exakt einzubringen. Entweder waren verschieden hohe Abdeckungen oder Unregelmäßigkeiten in der Sätiefe des Saatgutes die Ursache für verminderte Ernteerträge.

Es sind Sämaschinen bekannt, die mittels einer Verteilerleiste die Saat einer Säwalze zuführen. Diese liegt am Boden auf und wird bei Unebenheiten über große Bereiche abgehoben. Dadurch kommt es zu Unregelmäßigkeiten beim Sävorgang. Eine andere Ausführung geht von Doppelscheiben aus, die in dem von einer Bodenfräse kommenden Erdstrom laufen, wobei das Saatgut in dem Bereich zwischen die Scheiben pneumatisch zugefördert wird. Es hat sich gezeigt, daß der Ringraum zwischen den Scheiben in sehr kurzer Zeit durch Biomasse oder Erdreich verstopft ist, sodaß die Funktion der Doppelscheiben unterbunden ist.

Die Erfindung zielt darauf ab, eine Sämaschine zu schaffen, die den modernen Erkenntnissen entsprechend das Saatgut im Oberflächenbereich zuverlässig ausbringt und weder von Biomasse noch von Erdreich beeinflußt wird. Dies wird dadurch erreicht, daß die Scheibe, wie bei Eggen bekannt, als flacher schalenförmiger Rotationskörper ausgebildet ist, daß die Scheibe sowohl zur Fahrtrichtung als auch zur Vertikalen schräggestellt ist und vorzugsweise jeweils einen Winkel von 10° bis 25° aufweist und daß die Ausmündung des Särohres dem konvexen Bereich der Scheibe gegenüberliegend vorgesehen ist. Die besondere Ausbildung der Scheibe als flacher schalenförmiger bzw. kolottenförmiger Rotationskörper zusammen mit der Neigung in zwei Achsenrichtungen und die Anordnung des Särohres, durch welches das Saatgut mit Druckluft gefördert und gegen die konvexe Außenfläche der Scheibe geblasen wird, ergibt einen besonders guten Effekt, der frei von Störeinflüssen und weitgehend unempfindlich gegenüber Bodenbeschaffenheit und der Verteilung der Biomasse im Erdstrom etwa einer vorauslaufenden Bodenfräse ist. Es ist zweckmäßig, wenn auf dem Särohr ein in Fahrtrichtung vorspringender Ausleger für ein Lager der Scheibe angeordnet ist. Somit ist das Särohr gleichzeitig Teil der Tragkonstruktion für die Scheibe. Zur Verteilung des von der Scheibe abgelenkten Saatgutes und zur Schaffung eines Freiraumes für die Saatgutvertielung, ist es zweckmäßig, wenn zwischen dem Ausleger und dem Särohr ein mit einer Stirnkante an dem konvexen Bereich der Scheibe anliegendes Abstreifblech vorgesehen ist, das zur Scheibe schräggestellt ist und wenn die Ausmündung des Särohres in dem zwischen Abstreifblech und Scheibe gebildeten Winkelbereich angeordnet ist. Eine besondere Ausführungsform ist dadurch gekennzeichnet, daß das Särohr an einem Tragrahmen entgegen der Fahrtrichtung und gegen die Kraft mindestens einer Rückstellfeder schwenkbar gelagert ist. Die gesamte Anordnung weicht bei verstärktem Erddruck bzw. bei einem Hindernis zurück, wobei die Rückstellkraft progressiv zur Auslenkung zunimmt. Dazu ist eine Weiterbildung des Erfindungsgegenstandes dadurch gekennzeichnet, daß das Särohr zur schwenkbaren Lagerung oberhalb der Scheibe einen in Fahrtrichtung auskragenden Arm aufweist, dessen freies Ende an einem Querbalken eines Tragrahmens drehbar angelenkt ist, daß am Querbalken oder einem Flansch ein den Drehwinkel des Särohres gegen die Fahrtrichtung etwa in der vertikalen Position begrenzender Anschlag vorgesehen ist und daß die Rückstellfeder bzw. die Rückstellfedern zwischen dem Querbalken bzw. dessen Flansch und dem Särohr mit Vorspannung zur Anpressung des Särohres gegen den Anschlag angeordnet sind. Es ist zweckmäßig, wenn mehrere Särohre mit jeweils einer Scheibe in einer Reihe nebeneinander und mehrere, vorzugsweise drei solchen Reihen in Fahrtrichtung hintereinander angeordnet sind. Die Scheiben der mittleren der drei Reihen liegen in zweckmäßiger Weise in Fahrtrichtung gesehen zwischen den Scheiben der ersten und dritten Reihe und die Schrägstellung der Scheiben der mittleren Reihe zur Fahrtrichtung und zur Vertikalen ist spiegelbildlich zu jener der ersten und dritten Reihe. Es ist schließlich zweckmäßig, wenn der Rahmen an einer in Fahrtrichtung vorauslaufenden Bodenfräse höhenverstellbar angeschlossen und an seinem Ende auf einer nachlaufenden Walze abgestützt ist.

Ausführungsbeispiel des Erfindungsgegenstandes sind in den Zeichnungen dargestellt.

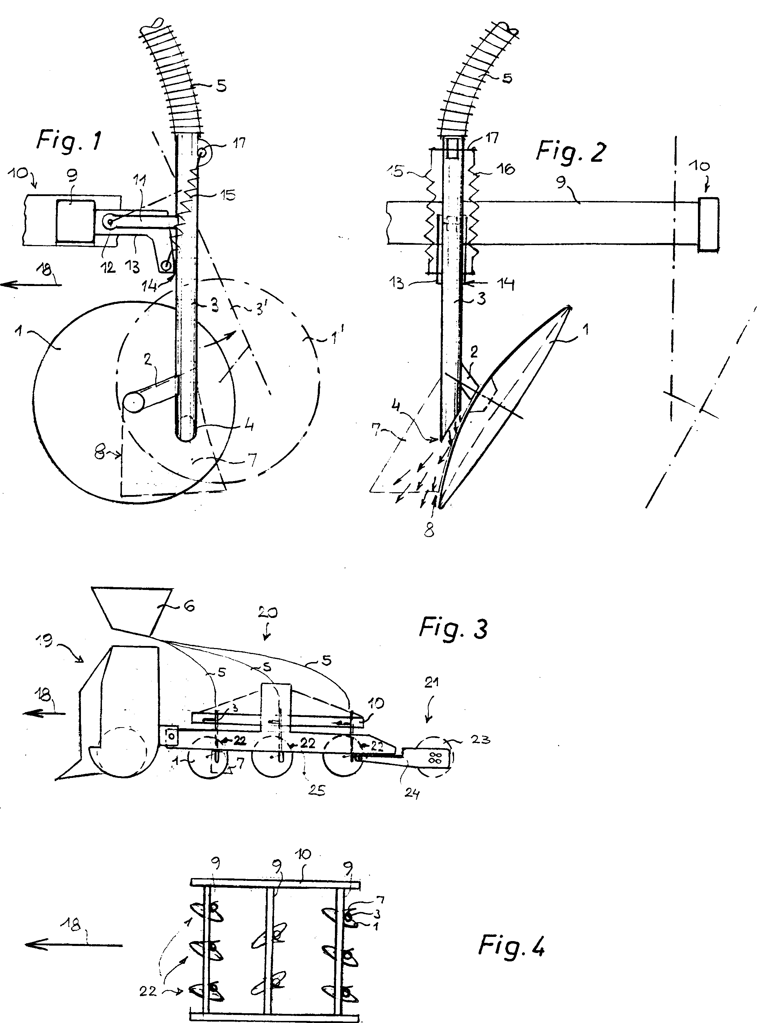

Fig. 1 zeigt die Anordnung einer einzelnen Scheibe von der Seite, Fig. 2 diese Anordnung in Fahrtrichtung, Fig. 3 eine Sämaschine mit einer Mehrzahl von Scheibenanordnungen gemäß Fig. 1 im Rahmen eines Bodenbearbeitungsgerätes in Seitenansicht und Fig. 4 einen Teil der Sämaschine nach Fig. 3 in Draufsicht.

Gemäß Fig. 1 und 2 umfaßt eine Säeinheit 22 einer Sämaschine 20 eine auf dem Boden geführte Scheibe 1, die als flache Schale oder Kugelkalotte ausgebildet ist. Sie kann einen Durchmesser von beispielsweise 30 cm aufweisen. Wie Fig. 2 zeigt, ist die Scheibe 1 in der Vertikalen und auch zur Fahrtrichtung in einem Winkel von etwa 10° - 25° geneigt. Dazu ist ein schräggestelltes Lager auf einen Ausleger 2 eines als Aufhängung ausgebildeten Särohres 3 vorgesehen. Der Abstand zwischen Särohr 3 und dem Scheibenlager kann beispielsweise 8 bis 15 cm betragen. Das Särohr 3 endet in Bodennähe mit einer Ausmündung 4, die dem konvexen Bereich der Scheibe 1 unmittelbar gegenüberliegt. Das obere Ende des Särohres 3 ist über einen flexiblen Schlauch 5 mit einer pneumatischen Saatgutdosier- und Zuführeinrichtung 6 (Fig. 3) verbunden, sodaß die Saatkörner, wie in Fig. 2 angedeutet, von der Ausmündung 4 gegen die schräge konvexe Fläche der am Boden laufenden Scheibe 1 prallen und sich von dort fächerartig über den Boden verteilen. Ein in Fig. 1 und 2 strichliert angedeutetes Abstreifblech 7 schmiegt sich mit seiner Stirnkante 8 an die konvexe Fläche der Scheibe 1 an und leitet einerseits allenfalls anhaftendes Material, wie Biomasse oder Erdreich, von der Scheibe 1 ab und schafft infolge der Winkelstellung zur Scheibe 1 einen geschützten Freiraum für die ungehinderte Verteilung des Saatgutes (Fig. 2).

Das Särohr 3 ist nicht starr an einem Querbalken 9 eines Tragrahmens 10 angeflanscht, sondern verfügt über einen etwa rechtwinkelig im Rahmenbereich vom Särohr auskragenden Arm 11 mit einem Lagerauge 12 an seinem Ende. Dieses Lagerauge 12 ist an einem Flansch 13 des Querbalkens 9 angelenkt, sodaß das Särohr 3 mit der Scheibe 1 in die Stellung 3′ bzw. 1′ schwenkbar ist. Den Schwenkbereich begrenzen einerseits ein Anschlag 14 auf dem Flansch 13 und anderseits zwei Federn 15, 16, die das Särohr 3 gegen den Anschlag 14 pressen. Die Federn 15, 16 sind mit Vorspannung zwischen dem Flansch 13 und einem Haltebolzen 17 auf der dem Arm 11 gegenüberliegenden Seite und oberhalb desselben eingehängt. Dadurch ergibt sich ein Drehmoment, das einer Auslenkung des Särohres 3 in Richtung auf die Position 3′ progressiv entgegenwirkt.

Die Fahrtrichtung ist in den Fig. 1, 3 und 4 durch die Pfeile 18 angegeben. Wenn also die Scheibe 1 eines erhöhten Reibungswiderstand etwa infolge eines Hindernisses, z.B. eines harten Erdklumpens, unterworfen ist, dann kann die gesamte in Fig. 1 und 2 dargestellte Säeinheit gegen die Kraft der Federn 15, 16 zurückweichen. Die Ausbildung der schalenförmigen Scheibe 1 und ihre Schräglage zur Vertikalen und zur Fahrtrichtung 18 führt zu einem Selbstreinigungseffekt, da Biomasse und Erdreich im konkaven Bereich der Scheibe 1 mit sanftem Druck entlang gleiten und den konvexen Bereich fließend überstreichen, um vom Abstreifblech seitlich abgelenkt zu werden.

Fig. 3 zeigt eine Maschine, die eine Bodenfräse 19, eine Säeinrichtung 20 und eine Walzeneinheit 21 umfaßt. Die Bodenfräse 19 hebt die Scholle mit den biologischen Rückständen der letzten Ernte, also z.B. Maisstroh an, ohne in große Tiefen zu gehen und homogenisiert das Material, das als Gemisch aus Erdreich und Biomasse die Fräse 19 verläßt. Im ablaufenden Erdstrom einschließlich der Biomasse, die sich entsprechend ihrer Größe verteilt, liegen eine Vielzahl von Säeinheiten 22 gemäß Fig. 1 und 2, die auf einen Rahmen 10, wie beschrieben, schwenkbar gelagert sind. Nachlaufend ist eine Walze 23 der Walzeneinheit 21 vorgesehen, die die von den Scheiben gebildeten Säfurchen egalisieren und die Saat einwalzen. Der Rahmen 10 ist zwischen der Bodenfräse 19 und der Walzeneinheit 21 höhenverstellbar ausgebildet. Ein über den Boden streichender Gummilappen kann zwischen der Säeinrichtung 20 und der Walzeneinheit 21 vorgesehen sein. Letztere ist auf einen separaten Rahmen vorgesehen, dessen Schenkel 24 an dem Chassis 25 der Säeinrichtung 20 angelenkt sind.

Fig. 4 zeigt ein Detail der Fig. 3 im Grundrriß, nämlich den Rahmen 10 der Säeinrichtung 20 mit den Säeinheiten 22 auf Querbalken 9. Es wurden bloß drei Säeinrichtungen 20 in der ersten und dritten Reihe und zwei Säeinrichtungen in der mittleren, versetzten Reihe beispielhaft dargestellt. Die hohlen Seiten der Scheiben sind der Fahrtrichtung zugewandt. In der Praxis ist ein Reihenabstand der Säfurche von 12,5 cm erwünscht. Dies kann aus Gründen des Durchsatzes von Biomasse nicht ein- oder zweireihig erreicht werden, sondern erfordert, wie in Fig. 3 und 4 dargestellt, drei Reihen von Scheibenscharen. Dabei räumt die erste Reihe infolge der Schrägstellung der Scheiben 1 von rechts nach links, die zweite Reihe von links nach rechts und die dritte Reihe wieder von rechts nach links. Hiebei deckt die zweite Reihe die erste Reihe und die dritte Reihe die zweite Reihe. Darauf folgt der erwähnte schwere Gummilappen,welcher die Furche zustreift. Die dreireihige Bauweise (Fig. 3 und 4) hat zudem den Vorteil, daß die jeweils angewendete Walze 23 (Packerwalze, Stabwalze, Krumenpackerwalze, Spiralwalze) in größerer Entfernung von der Bodenfräse 19 liegt. Dies hat zur Folge, daß der Fräserdurchsatz (Biomasse, Erdstrom) bereits beruhigt und nichtmehr in Bewegung ist, wenn er von der Walze 23 erreicht wird. Das Gummituch unterstützt diesen Effekt. Die Walze 23 rollt damit auf einen beruhigten Boden und stabilisiert die Maschine auch bei höheren Arbeitsgeschwindigkeiten. So können Geschwindigkeiten von mehr als den bisher üblichen 3,5 km/h gefahren werden.

## Patentansprüche

1. Fahrbare Sämaschine mit mindestens einer in Bodenberührung geführten und drehbar gelagerten, laufradähnlichen Scheibe, der ein mit einem Vorratsbehälter in Verbindung stehendes Särohr zugeordnet ist, dadurch gekennzeichnet, daß die Scheibe (1) wie bei Eggen bekannt, als flacher schalenförmiger Rotationskörper ausgebildet ist, daß die Scheibe (1) sowohl zur Fahrtrichtung (18) als auch zur Vertikalen schräggestellt ist und vorzugsweise jeweils einen Winkel von 10° bis 25° aufweist und daß die Ausmündung (4) des Särohres (3) dem konvexen Bereich der Scheibe (1) gegenüberliegend vorgesehen ist.

2. Sämaschine nach Anspruch 1, dadurch gekennzeichnet, daß auf dem Särohr (3) ein in Fahrtrichtung (18) vorspringender Ausleger (2) für ein Lager der Scheibe (1) angeordnet ist.

3. Sämaschine nach Anspuch 2, dadurch gekennzeichnet, daß zwischen dem Ausleger (2) und dem Särohr (3) ein mit einer Stirnkante (8) an dem konvexen Bereich der Scheibe (1) anliegendes Abstreifblech (7) vorgesehen ist, das zur Scheibe (1) schräggestellt ist und daß die Ausmündung (4) des Särohres (3) in dem zwischen Abstreifblech (7) und Scheibe (1) gebildeten Winkelbereich angeordnet ist.

4. Sämaschine nach den Ansprüchen 1 oder 2, dadurch gekennzeichnet, daß das Särohr (3) an einem Tragrahmen (10) entgegen der Fahrtrichtung (18) und gegen die Kraft mindestens einer Rückstellfeder (15, 16) schwenkbar gelagert ist.

5. Sämaschine nach Anspruch 4, dadurch gekennzeichnet, daß das Särohr (3) zur schwenkbaren Lagerung oberhalb der Scheibe (1) einen in Fahrtrichtung (18) auskragenden Arm (11) aufweist, dessen freies Ende an einem Querbalken (9) eines Tragrahmens (10) drehbar angelenkt ist, daß am Querbalken (9) oder einem Flansch (13) ein dem Drehwinkel des Särohres (3) gegen die Fahrtrichtung (18) etwa in der vertikalen Position begrenzender Anschlag (14) vorgesehen ist, und daß die Rückstellfeder bzw. die Rückstellfedern(15, 16) zwischen dem Querbalken (9) bzw. dessen Flansch (13) und dem Särohr (3) mit Vorspannung zur Anpressung des Särohres (3) gegen den Anschlag (14) angeordnet sind.

6. Sämaschine nach einem der Ansprüche 1 bis 5, dadurch gekennzeichnet, daß mehrere Särohre (3) mit jeweils einer Scheibe (1) in einer Reihe nebeneinander und mehrere, vorzugweise drei solcher Reihen in Fahrtrichtung (18) hintereinander angeordnet sind.

7. Sämaschine nach Anspruch 6, dadurch gekennzeichnet, daß die Scheiben (1) der mittleren von drei Reihen in Fahrtrichtung (18) zwischen den Scheiben (1) der ersten und dritten Reihe liegen und die Schrägstellung der Scheiben (1) der mittleren Reihe zur Fahrtrichtung und zur Vertikalen spiegelbildlich zu jener der ersten und dritten Reihe ist.

8. Sämaschine nach Anspruch 7, dadurch gekennzeichnet, daß der Rahmen (10) an einer in Fahrtrichtung (18) vorauslaufenden Bodenfräse (19) höhenverstellbar angeschlossen und an seinem Ende auf einer nachlaufenden Walze (23) abgestützt ist.
